# EUROPÄISCHE PATENTSCHRIFT

(11) **EP 1 805 056 B1**
(45) Veröffentlichungstag und Bekanntmachung des Hinweises auf die Patenterteilung: **11.12.2019**
(21) Anmeldenummer: 05796828.1
(22) Anmeldetag: 07.10.2005
(51) Int. Cl.: B60L 7/16, B60L 7/18, B60L 50/40, H02J 7/14, B60K 6/28

(54) **KRAFTFAHRZEUG MIT EINEM REKUPERATIONSGENERATOR**
MOTOR VEHICLE COMPRISING A RECUPERATION GENERATOR
VEHICULE A MOTEUR POURVU D'UN GENERATEUR DE RECUPERATION

(30) Priorität: 22.10.2004 DE 102004051530
(43) Veröffentlichungstag der Anmeldung: 11.07.2007
(73) Patentinhaber: AUDI AKTIENGESELLSCHAFT, 85045 Ingolstadt (DE)
(72) Erfinder: WINKLER, Josef, 85110 Kipfenberg (DE)
(74) Vertreter: Mader, Wilfried
(86) Internationale Anmeldenummer: PCT/EP2005/010793
(87) Internationale Veröffentlichungsnummer: WO 2006/045413

(56) Entgegenhaltungen:
- WO-A-02/25794
- DE-A1- 4 430 670
- DE-A1- 10 316 056
- US-A- 5 231 344
- PATENT ABSTRACTS OF JAPAN Bd. 1996, Nr. 02, 29. Februar 1996 (1996-02-29) -& JP 07 264708 A (FUJI HEAVY IND LTD), 13. Oktober 1995 (1995-10-13)

## Beschreibung

Die Erfindung betrifft ein Kraftfahrzeug mit einem Generator und wenigstens einem Kondensator, in dem vom als Rekuperator betreibbaren Generator in einer Schubphase des Kraftfahrzeugs erzeugte Rekuperationsenergie speicherbar ist, wobei der die Leistung des Generators begrenzende Erregerstrom im Erregerkreis des Generators in Abhängigkeit wenigstens eines fahrzeugspezifischen Betriebsparameters variierbar ist, wobei der fahrzeugspezifische Betriebsparameter die momentane Ist-Fahrgeschwindigkeit ist.

Zur Kraftstoffeinsparung wird versucht, die kinetische Fahrzeugenergie insbesondere in den Schubphasen, wenn also kein Kraftstoff eingespritzt und der Motor nicht aktiv betrieben wird, zu nutzen und als elektrische Energie gewandelt in einem elektrischen Energiespeicher zwischenzuspeichern und in dem anschließenden Beschleunigungs- oder Fahrphasen wieder zur Verfügung zu stellen. Vornehmlich wird als Energiespeicher ein Kondensator verwendet, in dem zum einen die Energie sehr schnell gespeichert, zum andern auch sehr schnell abgerufen werden kann. Aufgrund dieser dem Kondensator entnehmbaren Energiemenge ist es möglich, den Generator, der in der Beschleunigungs- oder Fahrphase die Stromerzeugung für die Versorgung des Bordnetzes übernimmt, zu entlasten, nachdem der Generator die kondensatorseitig abziehbare Energiemenge selbst nicht zur Verfügung stellen muss, woraus letztlich die Kraftstoffeinsparung resultiert. Als zur Rekuperation geeigneter Generator wird vornehmlich ein elektrisch erregter Klauenpolgenerator verwendet. Im Rekuperationsbetrieb, also in der Schubphase, wird der Sollwert für die Generatorspannung auf den Maximalwert, der meist der zulässigen Kondensatorspannung entspricht, erhöht, das heißt, die am Generator abgreifbare Kondensatorladespannung ist maximal. Gleichzeitig wird der Generator voll erregt, das heißt, der Erregerstrom im Erregerkreis des Generators ist ebenfalls maximal. Infolgedessen steigt die Generatorleistung stark an, der Kondensator wird geladen. Da der Generator im Rekuperationsbetrieb gleichermaßen über den Brennkraftmotor angetrieben wird, stellt er auch in diesem Fall eine aktive Last dar, über die das Fahrzeug abgebremst wird. Da die Schubphasen, wenn man also das Gaspedal freigibt und nicht betätigt, meist sehr kurz sind wird versucht, in möglichst kurzer Zeit viel Energie im Kondensator zu speichern. Dies wird durch die Wahl eines entsprechend leistungsstarken Generators erreicht. Die mögliche Rekuperationsleistung, also die Generatorleistung, ist dabei drehzahlabhängig. Mit zunehmender Drehzahl steigt die Generatorleistung, sie erreicht je nach Auslegung des Generators bei höheren Drehzahlen gegebenenfalls ein Maximum. Die zur Verfügung stehende kinetische Energie, die über den Generator rekuperiert werden kann, ist dabei geschwindigkeitsabhängig.

Neben einer Abhängigkeit der Rekuperationsleistung von der Drehzahl bzw. der Fahrgeschwindigkeit ist die Rekuperationsleistung auch vom aktuellen Ladezustand des Kondensators abhängig, da die mögliche Generatorleistung spannungsabhängig ist. Die Generatorspannung passt sich der Kondensatorspannung an, das heißt, bei einer hohen Kondensatorspannung, wenn also der Kondensator bereits teilweise oder relativ weit aufgeladen ist, wird am Generator eine hohe Generatorspannung abgegriffen, damit ist auch eine hohe Rekuperationsleistung gegeben. Bei niedriger Kondensatorspannung und niedriger Generatorspannung wird mit geringer Leistung gearbeitet. Im Rekuperationsfall stellt sich also am Generator zunächst die aktuelle Kondensatorspannung ein, die allmählich mit dem Ladestrom gemäß U = I * t /C ansteigt. Mit zunehmender Spannung nimmt damit auch die Rekuperationsleistung gemäp P = U * I zu, das heißt, die aktive Last nimmt zu, woraus auch eine stärkere Fahrzeugverzögerung resultiert.

Wie beschrieben stellt der Generator im Rekuperationsbetrieb eine Last dar, die für eine im Schubbetrieb eintretende Fahrzeugverzögerung mit verantwortlich ist. Nachdem wie beschrieben versucht wird, in den kurzen Schubphasen möglichst viel Energie zu speichern und leistungsstarke Generatoren verwendet werden, wird mit hoher Rekuperationsleistung gearbeitet, woraus auch eine hohe Rekuperations-Bremsleistung des Generators resultiert. Diese hohe resultierende Bremsleistung führt aber vor allem bei niedrigen Geschwindigkeiten, wenn also die kinetische Energie des Fahrzeugs gering ist, zu einer unangenehmen, starken Verzögerung des Fahrzeugs, einem sogenannten Lastwechselschlag. Das Fahrzeug wird relativ abrupt verzögert, was von vielen Fahrern als unangenehm empfunden wird.

Die Druckschrift JP 07 264708 A offenbart eine Vorrichtung zum regenerativen Bremsen eines Kraftfahrzeugs. Ein Erregerstrom eines Generators wird geschaltet, wenn das Fahrzeug bremst, die Reisegeschwindigkeit oberhalb eines Grenzwerts liegt und ein durch den Generator zu ladender Kondensator in einem ladbaren Zustand ist.

Der Erfindung liegt damit das Problem zugrunde, ein Kraftfahrzeug anzugeben, bei dem eine als unangenehm empfundene, zu starke Verzögerung des Fahrzeugs im Rekuperationsbetrieb reduziert bis vermieden werden kann.

Das Problem wird durch ein Kraftfahrzeug gemäß Anspruch 1 gelöst.

Beim erfindungsgemäßen Kraftfahrzeug erfolgt eine Anpassung der Generatorleistung an die aktuelle Fahrsituation über eine Regelung des Erregerstroms des Generators.

Diese Erregerstromregelung erfolgt in Abhängigkeit fahrzeugspezifischer Betriebsparameter, wobei einer dieser Betriebsparameter die momentane Ist-Fahrgeschwindigkeit ist, die dem die Stromregelung steuernden Steuergerät über eine beliebige Geschwindigkeitserfassungseinrichtung gegeben werden kann. Bei hohen Geschwindigkeiten steht ausreichend kinetische Energie zur Verfügung. Hier kann mit voller Leistung, also mit maximalem Erregerstrom rekuperiert werden, nachdem aufgrund der hohen gegebenen kinetischen Energie die ihr quasi entgegenwirkende generatorseitige Bremsleistung fast vemachlässigbar ist und es infolgedessen zu einer hieraus resultierenden minimalen, kaum wahrnehmbaren Verzögerung kommt. Bei niedriger Geschwindigkeit, wo sich im Stand der Technik die starke, unangenehme Verzögerung einstellt, wird erfindungsgemäß die Generatorleistung durch Begrenzen des Erregerstroms reduziert, das heißt, die aktive, vom Generator gebildete und für die Verzögerung verantwortliche Last wird zurückgenommen, so dass es zu keiner unangenehmen Verzögerung kommt. Es wird also über den Generator bei niedriger Geschwindigkeit weniger stark gebremst.

Ein zweiter Regelparameter ist erfindungsgemäß der momentane Ladezustand des Kondensators. Ist der Kondensator entladen, stellt sich wie beschrieben eine niedrige Generatorspannung an, der Generator arbeitet mit geringer Leistung. Die Bremswirkung ist in diesem Fall sehr gering, der Erregerstrom kann hier erhöht oder generell nicht begrenzt werden, ohne dass es zu einer unangenehmen Verzögerung kommt. Mit zunehmender Ladung des Kondensators wird der Erregerstrom aufgrund der spannungsabhängig steigenden Generatorleistung begrenzt oder reduziert, um die Bremswirkung zurückzuführen. Dabei sollte die spannungsabhängige Erregerstrombegrenzung bevorzugt nur dann greifen, wenn mit niedriger Geschwindigkeit gefahren wird, nachdem auch hier gilt, dass bei hoher kinetischer Energie, wenn also schnell gefahren wird, eine Erregerstrombegrenzung generell nicht nötig ist, da es aufgrund der hohen kinetischen Energie nicht zu einer unangenehmen Verzögerung kommt.

Es ist möglich, die Erregerstromregelung in Abhängigkeit eines fahrzeugspezifischen Betriebsparameters, nämlich der Ist-Fahrgeschwindigkeit, und des momentanen Ladezustands des Kondensators vorzunehmen. Erfindungsgemäß werden zur Regelung beide Größen berücksichtigt.

Der Erregerstrom kann erfindungsgemäß stufenweise oder linear veränderbar sein. Bei einer stufenweisen Veränderung des Erregerstroms sind im Steuergerät beispielsweise diskrete Stufen definiert, beispielsweise zu 100%, 70%, 50%, 30% Erregerstrom, die je nach tatsächlich erfasstem Regelparameter, also beispielsweise Ist-Fahrgeschwindigkeit oder Ladezustand, entsprechend gewählt werden und der entsprechende am Generatorregler einzustellende Sollwert ausgegeben wird. Alternativ ist auch eine lineare Veränderung denkbar, vornehmlich bei digitalen Stromreglem, die über eine entsprechende Schnittstelle mit dem Steuergerät verbunden sind und den entsprechenden Sollwert, der angibt, wie hoch der Erregerstrom sein darf, vorgegeben bekommen.

Dabei können zur stufenweisen Veränderung des Erregerstroms in einem die Veränderung des Erregerstroms steuernden Steuergerät Betriebsparameter- und Ladezustands-Sollwerte abgelegt sein, wobei eine Veränderung des Erregerstroms erst dann erfolgt, wenn der Betriebsparameter oder der über die Kondensatorspannung erfasste Ladezustand den Sollwert unter- oder überschreitet. Die Ist-Geschwindigkeit ist ein entsprechender Regelparameter. Es kann steuergeräteseitig definiert sein, dass generell eine Erregerstromreduzierung erst dann möglich ist, wenn die Ist-Geschwindigkeit kleiner gleich einem Sollwert von z.B. 80 km/h ist. Bei höheren Geschwindigkeiten ist infolge der hohen kinetischen Energie wie beschrieben eine Stromregelung nicht erforderlich. Unterscheidet also die Ist-Geschwindigkeit den Sollwert, wird der Erregerstrom stufenweise oder linear reduziert. Sind mehrere solcher Sollwerte gegeben, beispielsweise 80 km/h, 60 km/h, 40 km/h, 20 km/h, denen jeweils diskrete Reduktionsstufen zugeordnet sind, so wird bei zunehmender Verlangsamung des Fahrzeugs kontinuierlich von Stufe zu Stufe nachgeregelt. Gleichermaßen umgekehrt kann nachgeregelt werden, wenn das Fahrzeug in der Schubphase beispielsweise beschleunigt, was bei einer Bergabfahrt der Fall sein kann. Wird hierbei eine niedrigere Geschwindigkeits-Sollwertstufe, z.B. 60 km/h, aufgrund der Beschleunigung überschritten, wird der Erregerstrom auf die nächsthöhere Stufe erhöht, da aufgrund der höheren kinetischen Energie mit einem höheren Erregerstrom gearbeitet werden kann.

In entsprechender Weise wird mit ladezustandsbezogenen Sollwerten gearbeitet, wobei in diesem Fall als Sollwerte zweckmäßigerweise Spannungswerte betreffend die Kondensatorspannung abgelegt sind. Über die abgegriffene momentane Ist-Kondensatorspannung kann der Ladezustand erfasst werden, wozu das Steuergerät in entsprechender Weise die aufgenommenen Werte zur Kondensatorspannung erhält.

Für eine lineare Veränderung des Erregerstroms im Steuergerät können in diesem erfindungsgemäß geschwindigkeits- und ladezustandsbezogene Steuerkennlinien abgelegt sein, anhand welcher das Steuergerät in Verbindung mit der jeweils gegebenen Ist-Geschwindigkeit und dem Ist-Ladezustand den dem Erregerstromregler zu gebenden Wert des einzustellenden Erregerstroms bestimmt.

Da die Regelung des Erregerstroms in Abhängigkeit sowohl der Ist-Fahrgeschwindigkeit als auch des Kondensatorladezustands erfolgt, ist im Steuergerät ein dreidimensionales Kennfeld abgelegt, aus dem das Steuergerät in Abhängigkeit der gegebenen Regelparameter den jeweils einzustellenden Erregerstromwert wählt und an den Stromregler gibt. In diesem sind längs der drei Achsen die Ist-Geschwindigkeit, die Ist-Kondensatorspannung (also der Ladezustand) sowie der Erregerstrom aufgetragen. Über das Kennfeld kann gegebenenfalls auch eine geschwindigkeitsbezogene Priorisierung erfolgen, um gegenläufige Effekte zu vermeiden, die sich beispielsweise dann einstellen, wenn bei einer sehr niedrigen Geschwindigkeit und vollständig entladenem Kondensator aufgrund der spannungsabhängigen Regelung zwar ein höherer Erregerstrom zulässig wäre, geschwindigkeitsabhängig aber mit einem niedrigen Erregerstrom gearbeitet werden soll, um bei der geringen Geschwindigkeit mit geringer Verzögerung zu arbeiten.

Weitere Vorteile, Merkmale und Einzelheiten der Erfindung ergeben sich aus dem im folgenden beschriebenen Ausführungsbeispiel sowie anhand der Zeichnungen. Einige beschriebene Varianten sind hierbei nicht erfindungsgemäß. Dabei zeigen:
- Fig. 1: ein Kraftfahrzeug mit herausgezogener Prinzipdarstellung des Bordnetzes,
- Fig. 2: ein Diagramm zur Darstellung der Abhängigkeit der Generatorleistung von der Motordrehzahl für verschiedene Leistungsstufen ohne oder mit Erregerstrombegrenzung,

- Fig. 3: ein Diagramm zur Darstellung des Verhältnisses der Kondensatorspannung zum Erregerstrom, und
- Fig. 4: ein weiteres Bordnetz für ein erfindungsgemäßes Kraftfahrzeug mit zwei Generatoren.

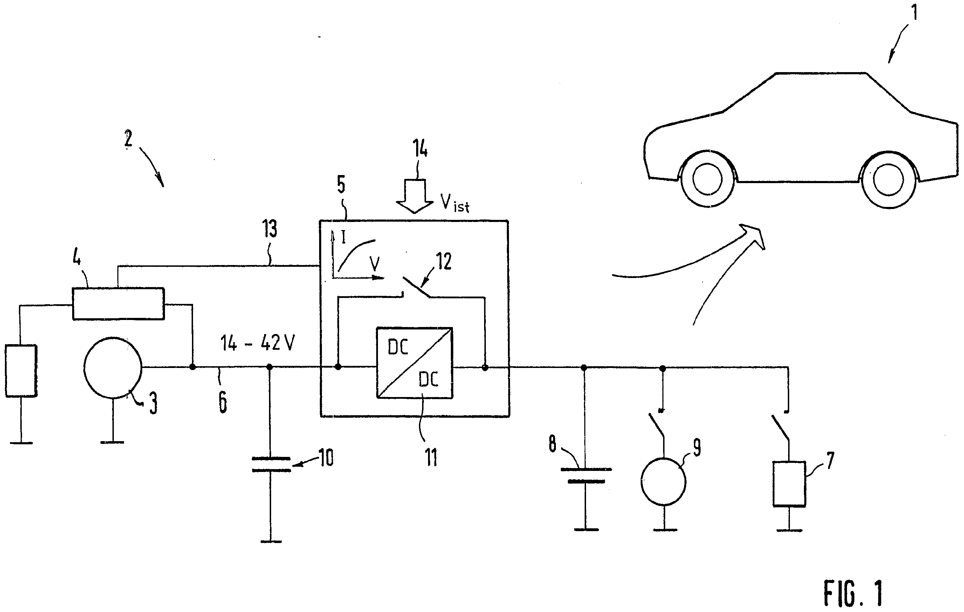

Fig. 1 zeigt ein Kraftfahrzeug 1 mit einem vergrößert als Prinzipskizze dargestellten Bordnetz 2. Dieses umfasst einen Generator 3, dem ein Regler 4 zugeordnet ist, der mit einem Steuergerät 5 in Verbindung steht, und über den nach Vorgabe durch das Steuergerät 4 die vom Generator 3 gelieferte Ausgangsspannung geregelt wird, die im gezeigten Beispiel zwischen 14 - 42 V variierbar ist, und über den der Erregerstrom, mit dem der nicht näher gezeigte Erregerkreis des bevorzugt als Klauenpolgenerator ausgebildeten Generators 3 gespeist wird, geregelt wird. Die Ausgangsspannung wird auf eine Generatorausgangsleitung 6 gegeben, an der im gezeigten Beispiel ein 14 V-Verbraucher 7 hängt, bei dem es sich um einen beliebigen Verbraucher handeln kann, wobei hier aus Übersichtlichkeitsgründen lediglich ein Verbraucher vorgesehen ist. Über den Generator 3 wird ferner die Batterie 8 gespeist, wie auch ein Starter 9 zum Starten des Motors vorgesehen ist. Des Weiteren ist an die Ausgangsleitung 6 ein Kondensator 10 angeschlossen, bei dem es sich um einen Hochleistungskondensator, beispielsweise vom Typ "Supercap", handelt. Dieser Kondensator 10 wird, wenn das Fahrzeug 1 in eine Schubphase übergeht, über den dann als Rekuperator dienenden Generator 3 geladen. Das heißt, in dieser Schubphase wird aufgrund der Rekuperation Energie gewonnen und im Kondensator 10 zwischengespeichert. Geht das Fahrzeug wieder in den normalen Fahrbetrieb über, wird die im Kondensator 10 gespeicherte Energie entnommen und dem Bordnetz zugeführt. Solange dem Kondensator 10 entnommen werden kann, kann der Generator 3 entlastet werden, woraus eine Kraftstoffeinsparung resultiert.

Im Steuergerät ist ein Gleichspannungswandler 11 vorgesehen, über den die Generatorspannung, sofern sie größer als 14 V ist, reduziert wird, um die 14 V-Verbraucher zu betreiben. Über ein Schaltmittel 12 im Steuergerät kann, wenn Hochstromverbraucher, die hier nicht näher gezeigt sind, zugeschalten werden, die höhere Spannung an diese übertragen werden.

Um den Regler 4 hinsichtlich der vorgesehenen Erregerstromvariierung entsprechend steuern zu können, ist das Steuergerät 5 mit dem bevorzugt digitalen Regler 4 über eine Kommunikationsleitung 13 und eine entsprechende Schnittstelle verbunden. Über diese Steuerleitung erhält der Regler vom Steuergerät die entsprechenden Vorgaben, wie hoch der Erregerstrom, mit dem der Erregerkreis des Generators 3 betrieben wird, im Moment sein darf, der Regler stellt den Erregerstrom dann entsprechend ein und variiert hierüber die Generatorleistung. Hierzu ist beispielsweise im Steuergerät 5 eine Steuerkennlinie abgelegt, wie exemplarisch in Fig. 1 dargestellt ist. Aus dieser Steuerkennlinie wählt das Steuergerät 5 in Abhängigkeit der gegebenen Ist-Fahrgeschwindigkeit Vᵢₛₜ, die dem Steuergerät beispielsweise über den CAN-Bus 14 gegeben wird, den entsprechenden Stromwert aus, der vom Regler 4 einzustellen ist. Wenngleich in Fig. 1 nur die geschwindigkeitsabhängige Erregerstromregelung dargestellt ist, ist es selbstverständlich möglich, den Erregerstrom auch in Abhängigkeit des Ladungszustands des Kondensators 10 zu variieren. Der Ladezustand des Kondensators 10 wird dem Steuergerät über die momentane Kondensatorspannung mitgeteilt. Anhand einer vergleichbaren Steuerkennlinie, wie in Fig. 1 gezeigt, die dann aber ladungs- oder spannungsbezogen ist, kann dann die entsprechende Regelung erfolgen.

Um die bei niedrigeren Geschwindigkeiten häufig unangenehme Verzögerung des Fahrzeugs aufgrund des rekuperierend arbeitenden Generators zu unterbinden oder abzuschwächen, ist vorgesehen, beispielsweise in Abhängigkeit der Fahrgeschwindigkeit den Erregerstrom zu begrenzen. Über den Erregerstrom wird wie beschrieben die Leistung des Generators begrenzt, wobei die Leistung wiederum proportional zur Brems- oder Verzögerungswirkung des Generators ist.

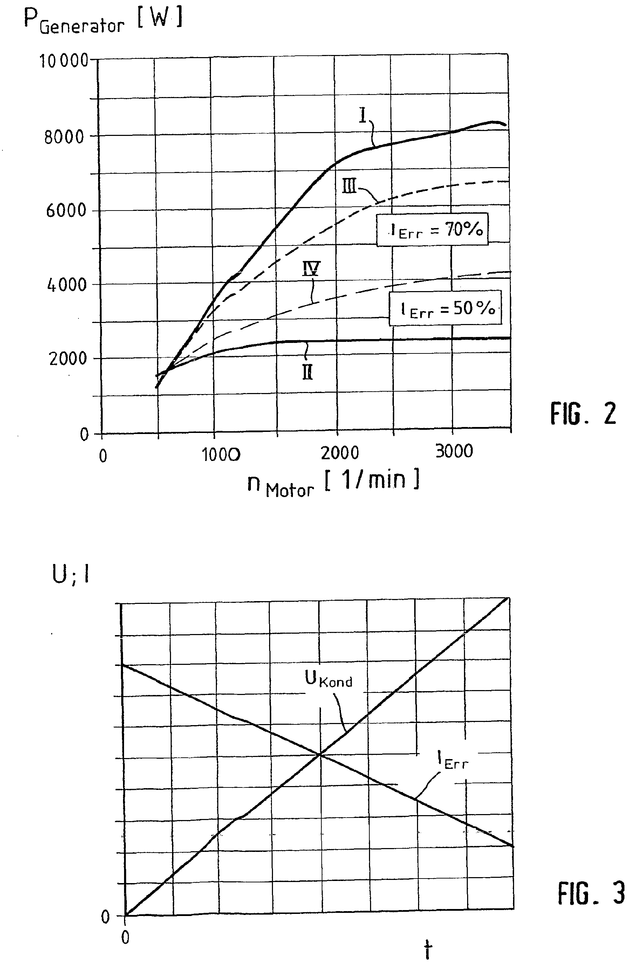

Fig. 2 zeigt als Diagramm die Abhängigkeit der Generatorleistung vom Erregerstrom, woraus sich die effektive Verzögerungsleistung des Generators im Rekuperationsbetriebs bezogen auf die Geschwindigkeit ersehen lässt. Dargestellt ist längs der Abszisse die Motorendrehzahl und längs der Ordinate die Generatorleistung. Die erste Kurve I zeigt den Verlauf der Leistung über die Drehzahl bei einer abgreifbaren Generatorspannung zwischen 14 - 42 V und maximaler Generatorerregung, also maximalen Generatorstrom. Die Kurve II zeigt die maximale Leistung bei maximalem Erregungsstrom bei begrenzter Generatorspannung auf 14 V.

Ausgehend von der Kurve I zeigt die Kurve III den Verlauf der Leistung, wenn der Erregerstrom I_{Err} auf 70% reduziert wird. Ersichtlich nimmt die Generatorleistung ab, verglichen mit der Kurve I. Der Anstieg der Leistung mit zunehmender Drehzahl ist deutlich schwächer ausgeprägt. Infolge dieser Leistungsabnahme stellt sich auch eine geringere Verzögerungsleistung im Rekuperationsbetrieb ein.

Noch deutlicher ausgeprägt ist das Verhalten bei einer Reduktion des Erregerstroms I_{Err} auf 50%, wie die Kurve IV darstellt. Die Leistungsabnahme ist im Vergleich zur Kurve III sehr stark ausgeprägt, das heißt, die Bremsleistung wird noch weiter reduziert.

Wird nun unter Berücksichtigung dieser Zusammenhänge dem Steuergerät 5 in Fig. 1 über den CAN-Bus 14 eine Ist-Geschwindigkeit Vᵢₛₜ mitgeteilt, die einen Geschwindigkeitsschwellwert, z.B. 80 km/h, unterschreitet, so greift das Steuergerät in einem nicht erfindungsgemäßen Beispiel auf die hinterlegte Kennlinie zurück und wählt denjenigen Ist-Erregerstromwert I_{Err} aus, der maximal zur Erregung anliegen darf, sofern in den Schubbetrieb übergegangen wird. Der Generator wird damit weniger stark erregt, seine Leistung und damit die effektive aktive Last wird reduziert, die Verzögerungswirkung ist geringer. Gleichwohl wird der Kondensator 10 noch hinreichend aufgeladen. Mit zunehmender Geschwindigkeitsabnahme regelt das Steuergerät 5 den Regler 4 entsprechend nach, so dass kontinuierlich die Höhe des Erregerstroms der Ist-Geschwindigkeit angepasst wird und mithin die effektive Bremswirkung des Generators der Ist-Geschwindigkeit angepasst wird.

An dieser Stelle ist darauf hinzuweisen, dass die Erregerstromregelung nur dann einsetzt, wenn überhaupt im Schubbetrieb gefahren wird. Dieser Betrieb kann dem Steuergerät ebenfalls über den CAN-Bus 14 signalisiert werden. Hierzu wird beispielsweise vom Motorsteuergerät mitgeteilt, dass kein Kraftstoff eingespritzt wird, oder es erfolgt eine Abtastung der Gaspedalstellung. Sofern diese gleich null oder negativ ist, wird dies ebenfalls dem Steuergerät mitgeteilt. Bei einem Bremsvorgang dagegen, wenn also das Bremspedal betätigt wird, wird generell eine hohe Verzögerung gewünscht. Infolgedessen wird in diesem Fall stets mit voller Generatorleistung rekuperiert, unabhängig von der Geschwindigkeit und dem Kondensatorladezustand. Das heißt, es liegt stets der maximale Erregerstrom an.

Fig. 3 zeigt in Form eines Diagramms den Zusammenhang zwischen der Kondensatorspannung U_{Kond} und dem Erregerstrom I_{Err}. Wie beschrieben erfolgt die Erregerstromregelung auf Basis des Ladezustands des Kondensators, erfasst über seine Spannung. Je niedriger die Kondensatorspannung ist, um so höher kann der Erregerstrom sein, da die bezogen auf die Kondensatorspannung erforderliche Generatorspannung und damit Generatorleistung klein ist. Es kann also in diesem Fall mit einem hohen bzw. maximalen Erregerstrom erregt werden. Dies deshalb, da bezogen auf den effektiven kondensatorseitig benötigten Leistungsbedarf die gesamte Generatorleistung und damit Bremswirkung gering ist.

Mit steigender Kondensatorspannung stellt sich am Generator eine immer höhere Generatorspannung ein, das heißt, der Generator arbeitet mit zunehmend höherer Leistung. Dem folgend nimmt der zulässige Erregerstrom ab, wie aus Fig. 3 ersichtlich ist.

Wie beschrieben wird die Erregerstromregelung sowohl in Abhängigkeit der Ist-Geschwindigkeit wie auch der Kondensatorspannung vorgenommen. Bei sehr langsamen Geschwindigkeiten kann gegebenenfalls die Priorisierung einer Regelungsbasis erforderlich sein. Bei geringen Geschwindigkeiten ist bei einer geschwindigkeitsabhängigen Regelung der Erregerstrom niedrig zu wählen. Ist im Regelzeitpunkt der Kondensator voll entladen, führt die kondensatorspannungsabhängige Regelung dazu, einen möglichst hohen Erregerstrom zu regeln. Hier ist es in einem nicht erfindungsgemäßen Beispiel möglich, die geschwindigkeitsbezogene Regelung zu priorisieren. Erfindungsgemäß wird aber über ein entsprechend ausgelegtes Kennfeld eine im jeweiligen Fall, also abhängig von den beiden anliegenden Regelparametern, optimierte Regelung definiert.

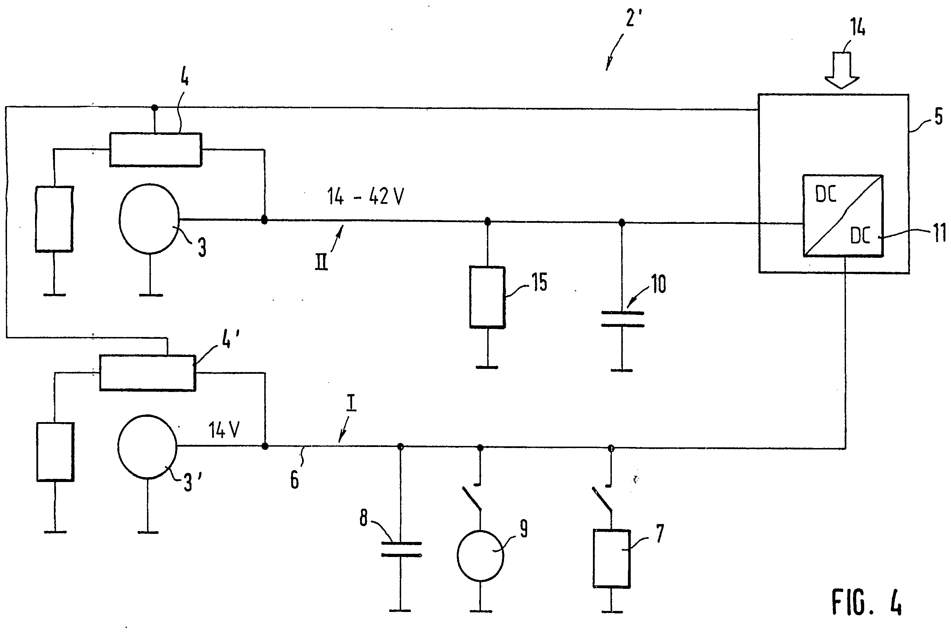

Fig. 4 zeigt als Prinzipskizze eine weitere Ausführungsform eines Bordnetzes bzw. einer Schaltungsanordnung für ein Energieverteilungsnetz in einem Kraftfahrzeug, wobei gleiche Bauteile mit den gleichen Bezugszeichen wie in Fig. 1 gekennzeichnet sind. Bei dem Bordnetz 2' ist ein Generator 3' nebst Regler 4' vorgesehen, wobei der Generator 3' primär dem Spannungskreis I zugeordnet ist, in dem die 14 V-Verbraucher 7, der Starter 9 sowie die Batterie 8 hängen. Der Regler 4' kommuniziert mit dem Steuergerät 5 und dient zum Regeln der Generatorausgangsspannung. Diese wird auf die Generatorausgangsleitung 6 gegeben, wobei die Generatorausgangsspannung auf 14 V begrenzt ist. Über die Leitung 6 wird die Spannung auf die entsprechenden Bauelemente verteilt.

Ein zweiter Spannungskreis II wird über einen separaten, im erfindungsgemäßen Sinn geregelten Generator 3 mit Spannung versorgt. In diesem Spannungskreis II hängt beispielsweise ein Hochstromverbraucher 15, z.B. eine Heckscheibenheizung. Diese benötigt eine Betriebsspannung von 42 V, die über den Generator 3 bereitgestellt wird. Ist der Hochspannungsverbraucher 15 nicht zugeschalten, wird die 14 V übersteigende Ausgangsspannung des Generators 3 gegebenenfalls über den Gleichspannungswandler 11 reduziert und dem Spannungskreis I zugeführt.

Im Spannungskreis II ist der Kondensator 10 integriert. Auch hier erfolgt über den Regler 4, der vom Steuergerät 5 angesteuert wird, die vorstehend beschriebene Regelung des Erregerstromes.

## Patentansprüche

1. Kraftfahrzeug mit einem Generator und wenigstens einem Kondensator, in dem vom als Rekuperator betreibbaren Generator in einer Schubphase des Kraftfahrzeugs erzeugte Rekuperationsenergie speicherbar ist, wobei der die Leistung des Generators begrenzende Erregerstrom im Erregerkreis des Generators in Abhängigkeit wenigstens eines fahrzeugspezifischen Betriebsparameters variierbar ist, wobei der fahrzeugspezifische Betriebsparameter die momentane Ist-Fahrgeschwindigkeit ist,
**dadurch gekennzeichnet,**
**dass** der Sollwert des Erregerstroms (I_{Err}) in Abhängigkeit der momentanen Ist-Fahrgeschwindigkeit (v_{Ist}) stufenweise, in mehreren Stufen, oder linear veränderbar ist, wobei
der Sollwert des Erregerstroms (I_{Err}) zusätzlich in Abhängigkeit des momentanen Ladezustands des Kondensators variierbar ist, wobei in einem Steuergerät (5) ein dreidimensionales Kennfeld abgelegt ist, aus dem das Steuergerät in Abhängigkeit der momentanen Ist-Fahrgeschwindigkeit (v_{Ist}) und des momentanen Ladezustands des Kondensators den Sollwert des Erregerstroms (I_{Err}) wählt und an einen Stromregler ausgibt.

## Claims

1. Motor vehicle with a generator and at least one capacitor, in which recuperation energy produced by the generator, which can be operated as a recuperator in the coasting phase of the motor vehicle, can be stored, wherein the excitation current that limits the power of the generator can be varied in an excitation circuit of the generator as a function of at least one vehicle-specific operational parameter, wherein the vehicle-specific operational parameter is the instantaneous actual driving speed,
**characterised in that**
the set value of the excitation current (I_{Err}) can be changed incrementally, in several steps, or linearly as a function of the instantaneous actual driving speed (vᵢₛₜ), wherein
the set value of the excitation current (I_{Err}) can be varied additionally as a function of the instantaneous charging state of the capacitor, wherein in a control device (5) a three-dimensional characteristic is saved, from which the control device as a function of the instantaneous actual driving speed (vᵢₛₜ) and the instantaneous charging state of the capacitor selects the set value of the excitation current (I_{Err}) and outputs it to a current controller.

## Revendications

1. Véhicule automobile avec un générateur et au moins un condensateur, dans lequel de l'énergie de récupération générée par le générateur pouvant fonctionner comme récupérateur dans une phase de décélération du véhicule automobile peut être accumulée, dans lequel le courant d'excitation délimitant la puissance du générateur est variable dans le cercle d'excitation du générateur en fonction d'au moins un paramètre de fonctionnement spécifique au véhicule, dans lequel le paramètre de fonctionnement spécifique au véhicule est la vitesse de roulement réelle momentanée,
**caractérisé en ce**
**que** la valeur de consigne du courant d'excitation (I_{Err}) peut être modifiée progressivement en fonction de la vitesse de roulement réelle momentanée (V_{Ist}), en plusieurs étapes, ou linéairement, dans lequel
la valeur de consigne du courant d'excitation (I_{Err}) est en plus variable en fonction de l'état de charge momentané du condensateur, dans lequel un champ caractéristique tridimensionnel est enregistré dans un appareil de commande (5), à partir duquel l'appareil de commande choisit, en fonction de la vitesse de roulement réelle momentanée (V_{Ist}) et de l'état de charge momentané du condensateur, la valeur de consigne du courant d'excitation (I_{Err}) et la transmet à un régulateur de courant.
